# EUROPÄISCHE PATENTSCHRIFT

(11) **EP 1 801 460 B1**
(45) Veröffentlichungstag und Bekanntmachung des Hinweises auf die Patenterteilung: **14.04.2010**
(21) Anmeldenummer: 06024872.1
(22) Anmeldetag: 01.12.2006
(51) Int. Cl.: F16H 55/36

(54) **Antriebseinheit mit einem inneren Antriebselement und einem äusseren Antriebselement**
Drive unit with an inner drive element and an outer drive element
Unité motrice ayant un composant moteur interne et un composant moteur externe

(30) Priorität: 21.12.2005 DE 102005061620
(43) Veröffentlichungstag der Anmeldung: 27.06.2007
(73) Patentinhaber: LuK Lamellen und Kupplungsbau Beteiligungs KG, 77815 Bühl (DE)
(72) Erfinder: Lehmann, Steffen, 76275 Ettlingen (DE)

(56) Entgegenhaltungen:
- EP-A- 1 378 677
- EP-A- 1 605 189
- DE-A1- 19 535 889
- DE-A1- 19 914 529

## Beschreibung

Die vorliegende Erfindung betrifft eine Antriebseinheit mit einem radial inneren Antriebselement und einem radial äußeren Antriebselement sowie einem zwischen dem inneren Antriebselement und dem äußeren Antriebselement angeordneten Freilauf.

Eine derartige Antriebseinheit ist beispielsweise aus der gattungsbildenden DE 19914529 als Riemenscheibeneinheit mit einer Freilaufkupplung bekannt. Um das Rutschen eines Riemens auf der Riemenscheibe als äußerem Antriebselement zu verhindern, ist zwischen Freilauf und äußerem Antriebselement ein Gummiteil angeordnet.

Aus der DE 19535889 ist eine Freilaufkupplung für einen Lichtmaschinenantrieb bekannt. Zur Übertragung axialer Kräfte ist beiderseits des Freilaufs jeweils ein Radiallager vorgesehen, das jeweils zwischen innerem und äußerem Antriebselement angeordnet ist.

Nachteilig an Antriebseinheiten nach Stand der Technik ist, dass diese axiale Schwingungen nahezu ungedämpft und unelastisch übertragen.

Eine Aufgabe der vorliegenden Erfindung ist es daher, ein Antriebselement bereitzustellen, das zumindest eine teilweise Schwingungsentkopplung zwischen innerem und äußerem Antriebselement ermöglicht.

Dieses Problem wird gelöst durch eine Antriebseinheit mit den Merkmalen gemäß dem Anspruch 1. Die axiale Verschiebbarkeit kann durch einen Freiheitsgrad in axialer Richtung oder vorzugsweise eine elastische Verbindung erfolgen. Durch die axiale Verschiebbarkeit erfolgt - abhängig von einer Federsteifigkeit und ggf. Dämpfung eines Verbindungsmittels zwischen den beiden Antriebselementen - eine zumindest teilweise Entkoppelung des inneren und äußeren Antriebselementes. Die Antriebseinheit ist bevorzugt eine Riemenscheibeneinheit, wobei das äußere Antriebselement eine Scheibe, insbesondere Riemenscheibe, und das innere Antriebselement eine Nabe zur Montage an einer Welle, beispielsweise einer Kurbelwelle oder mit der Kurbelwelle in Wirkverbindung stehenden Welle einer Brennkraftmaschine eines Fahrzeuges. Die Nabe kann dabei auch unmittelbar einstückig mit einer Welle verbunden sein.

Vorzugsweise ist vorgesehen, dass der Freilauf Nabenseitig mit mindestens einem Federelement, das in axialer Richtung elastisch ist, mit der Nabe verbunden ist. Der Freilauf ist dann fest, z. B. form- oder reibschlüssig, mit der Scheibe verbunden. Der Freilauf umfasst vorzugsweise einen Freilaufträger, der über das Federelement mit der Nabe verbunden ist. Vorzugsweise ist des Weiteren vorgesehen, dass der Freilaufträger mindestens eine Nase umfasst und die Nabe mindestens eine Nase umfasst, zwischen denen das Federelement angeordnet ist. Das Federelement ist vorzugsweise eine Blattfeder, wobei die Blattfeder vorzugsweise in der Scheibenebene drehbeweglich mit der Nabe und / oder dem Freilaufträger verbunden ist. Die drehbewegliche Lagerung umfasst vorzugsweise ein Drehgelenk, wobei das Drehgelenk bevorzugt einen Bolzen, insbesondere einen Nietbolzen, umfasst. Vorzugsweise ist weiter vorgesehen, dass zwischen Nabe und Freilaufträger ein drehbewegliches Lager angeordnet ist. Das drehbewegliche Lage kann vorzugsweise ein Gleitlager oder ein Wälzlager sein.

Alternativ ist auch eine geometrische Umkehr möglich, so dass der Freilauf scheibenseitig mit mindestens einem Federelement, das in axialer Richtung elastisch ist, mit der Scheibe verbunden ist. Der Freilauf ist dann fest mit der Nabe verbunden. In dieser alternativen Variante ist vorzugsweise vorgesehen, dass die Antriebseinheit einen Freilaufträger umfasst, der über das Federelement mit der Scheibe verbunden ist. Weitere Ausgestaltungen dieser geometrischen Umkehr sind entsprechend der vorteilhaften Ausgestaltungen, wie sie in den Unteransprüchen für die Variante mit dem nabenseitigen Federelement genannt sind, möglich. Alternativ kann der Freilauf auch mit Nabe und Scheibe jeweils über elastische Elemente verbunden sein.

Die axiale Schwingungsentkopplung wird bei der vorliegenden Erfindung durch axial weiche Elemente, die jedoch in Umfangsrichtung vergleichsweise steif sind, ermöglicht. Der axial notwendige Bauraum entspricht bisherigen Lösungen nach Stand der Technik, es sind also keine konstruktiven Änderungen bei einem Ersatz z. B von Riemenscheiben mit Freilauf nach Stand der Technik notwendig.

Im Folgenden werden Ausführungsbeispiele der Erfindung anhand der beiliegenden Zeichnungen erläutert. Dabei zeigen:
- Fig. 1: einen Schnitt durch ein Ausführungsbeispiel eines erfindungsgemäßen Freilaufs;
- Fig. 2: das Ausführungsbeispiel der Fig. 1 in der Draufsicht.

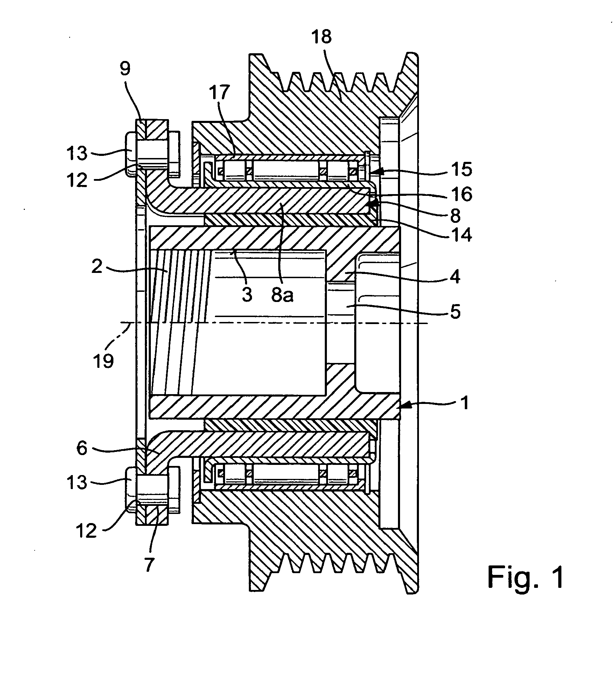

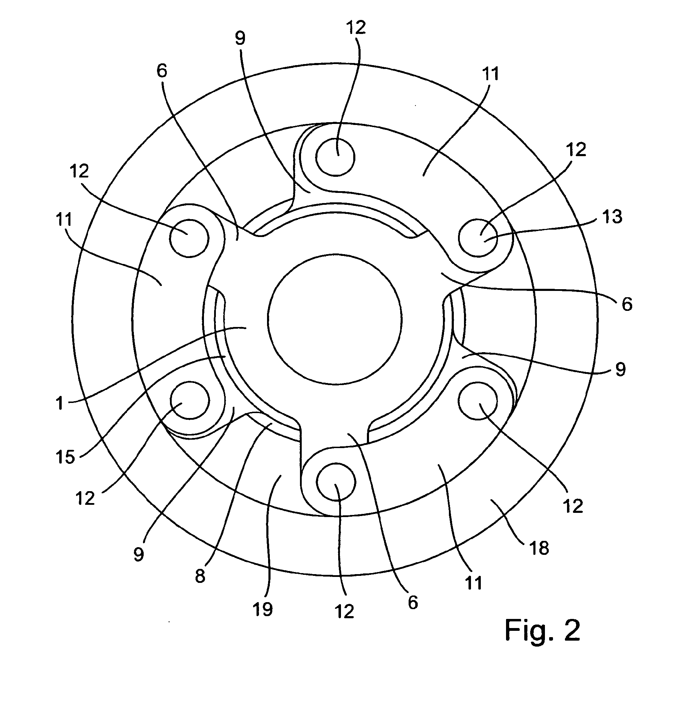

Fig. 1 zeigt einen axialen Schnitt durch ein Ausführungsbeispiel einer erfindungsgemäßen Antriebseinheit, Fig. 2 zeigt das Ausführungsbeispiel in der Draufsicht. Eine Nabe 1 als radial inneres Antriebselement kann mit einer nicht dargestellten Welle verbunden werden. Die Nabe 1 umfasst dazu in bekannter Art und Weise beispielsweise eine Innenverzahnung 2, die in einen Wellensitz 3 übergeht, der weiter in eine Lochscheibe 4 mit einer Bohrung 5 übergeht, so dass die Nabe 1 beispielsweise mit einem Stehbolzen, auf den eine Mutter aufgeschraubt werden kann, mit der nicht dargestellten Welle zur Übertragung eines Drehmomentes verbunden werden kann. Alternativ ist es möglich, dass die Nabe 1 und die Welle einstückig gefertigt sind, die Nabe also ein unmittelbar einstückig an die Welle angeformtes Bauteil dieser ist. An der Nabe 1 sind nabenseitige Nasen 6 ausgebildet, die mit einer Bohrung 7 versehen sind. Die Nasen 6 der Nabe 1 sind gegenüber einem im Wesentlichen zylindrischen Grundkörper 1a der Nabe 1 in einem Winkel von 90° radial nach außen sich erstreckend angeordnet. Radial außerhalb der Nabe 1 ist ein Freilaufträger 8 angeordnet, an den freilaufträgerseitige Nasen 9 angeformt sind. Die Nasen 9 sind gegenüber einem Grundkörper 8a, der eine im Wesentlichen zylindrische Form aufweist, radial nach außen in einem Winkel von etwa 90° gebogen. In die Nasen 9 sind jeweils Bohrungen 10 eingebracht.

Die Nasen 6 und 9 sind in etwa in der gleichen radialen Ebene zueinander angeordnet und sind mit Blattfedern 11 als Federelemente jeweils abwechselnd miteinander verbunden. Es ist also jeweils eine Nabenseitige Nase 6 mit einer freilaufträgerseitigen Nase 9 verbunden. Dazu weisen die Blattfedern 11 jeweils zwei Bohrungen 12 auf, so dass durch die Bohrungen 12 und jeweils einer Bohrung 7 der Nabenseitigen Nase 6 bzw. eine Bohrung 10 der freilaufträgerseitigen Nase 9 ein Nietbolzen 13 angeordnet ist. Die Nietbolzen 13 sind jeweils in der Lage, radial auf diese wirkende Kräfte zu übertragen, mithin Kräfte in Umfangsrichtung der Nabe 1 bzw. des Freilaufträgers 8. Die Steifigkeit der Blattfedern 11 in Umfangsrichtung ist dabei sehr groß, die Biegesteifigkeit in axialer Richtung der Drehachse 19 ist vergleichsweise gering. Durch die Blattfedern 11 ist es möglich, ein Drehmoment zwischen Nabe 1 und Freilaufträger 8 zu übertragen, wobei der Freilaufträger 8 gegenüber der Nabe 1 in axialer Richtung gegen die Federkraft der Blattfedern 11 verschoben werden kann.

Zwischen Nabe 1 und Freilaufträger 8 ist ein Gleitlager 14 angeordnet, dies kann beispielsweise eine Kunststoffbuchse sein. Die Buchse kann über eine nicht näher dargestellte Klemmverbindung oder Schraubverbindung oder dergleichen mit dem Freilaufträger 8 verbunden sein oder kann in diesen eingepresst sein. Radial außerhalb des Freilaufträgers 8 schließt sich ein Freilauf 15 an, wobei eine Innenschale 16 sowohl in Umfangsrichtung als auch in axialer Richtung kraftschlüssig mit dem Freilaufträger 8 verbunden ist und eine Außenschale 17 entsprechend in axialer wie radialer Richtung kraftschlüssig mit einer Riemenscheibe 18 als radial äußeres Antriebselement verbunden ist. Der Freilauf 15 hat die Aufgabe, in einer Drehrichtung ein Drehmoment zwischen Nabe 1 und Riemenscheibe 18 zu übertragen, in die andere Drehrichtung eine möglichst freie Relativdrehung zwischen beiden zu erlauben. Der Freilauf 15 kann in beliebiger Weise wie im Stand der Technik bekannt ausgebildet sein.

Statt Nietbolzen 13 können hier auch Schraubbolzen oder dergleichen verwendet werden. Die Riemenscheibe 18 kann alternativ auch beispielsweise ein Zahnrad oder ein sonstiges beliebiges rotierendes Bauteil sein und wird hier deshalb allgemein als Scheibe bezeichnet. Die axiale Federsteifigkeit zwischen Nabe 1 und Freilaufträger 8 und damit die axiale Federsteifigkeit zwischen Nabe 1 und Riemenscheibe 18 ist abhängig von der Geometrie der Blattfedern 11. Je schlanker die Blattfedern 11 sind, dies bedeutet, je höher das Verhältnis des Abstandes der Bohrung 12 zum Querschnitt der Blattfedern 11 ist, desto geringer ist die Steifigkeit. Die Steifigkeit der Blattfedern 11 wird also wie die Steifigkeit eines Balkens bestimmt. Statt Blattfedern 11 könnten hier auch andere Federelemente verwendet werden. Beispielsweise könnten die Nasen 6 und 9 auch in axialer Richtung zur Deckung gebracht werden und zwischen beiden Schraubenfedern Gummipuffer oder dergleichen angeordnet sein. Im vorliegenden Ausführungsbeispiels verfügt die Nabe 1 und der Freilaufträger 8 jeweils über drei Nasen, hier kann die Anzahl der Nasen aber auch anders gewählt werden, beispielsweise jeweils zwei Nasen, oder jeweils vier, fünf oder mehr Nasen.

### Bezugszeichenliste

- 1: Nabe
- 2: Innenverzahnung
- 3: Wellensitz
- 4: Lochscheibe
- 5: Bohrung
- 6: Nase
- 7: Bohrung
- 8: Freilaufträger
- 9: Nase
- 10: Bohrung
- 11: Blattfeder
- 12: Bohrungen
- 13: Nietbolzen
- 14: Gleitlager
- 15: Freilauf
- 16: Innenschale
- 17: Außenschale
- 18: Riemenscheibe
- 19: Drehachse

## Patentansprüche

1. Antriebseinheit mit einem radial inneren Antriebselement (1) und einem radial äußeren Antriebselement (18) sowie einem zwischen dem inneren Antriebselement (1) und dem äußeren Antriebselement (18) angeordneten Freilauf (15), wobei
das innere Antriebs-element eine Nabe (1) und das äußere Antriebselement eine Scheibe ist, **dadurch gekennzeichnet, dass** die Nabe (1) und die Scheibe (18) axial gegeneinander verschiebbar sind.

2. Antriebseinheit nach Anspruch 1, **dadurch gekennzeichnet, dass** das äußere Antriebselement eine Riemenscheibe (18) ist.

3. Antriebseinheit nach Anspruch 1 oder 2, **dadurch gekennzeichnet, dass** der Freilauf (15) nabenseitig mit mindestens einem Federelement (11), das in axialer Richtung elastisch ist, mit der Nabe (1) verbunden ist.

4. Antriebseinheit nach Anspruch 3, **dadurch gekennzeichnet, dass** der Freilauf (15) eine Freilaufträger (8) umfasst, der über das Federelement (11) mit der Nabe (1) verbunden ist.

5. Antriebseinheit nach Anspruch 4, **dadurch gekennzeichnet, dass** der Freilaufträger (15) mindestens eine Nase (9) umfasst und die Nabe (1) mindestens eine Nase (6) umfasst, zwischen denen das Federelement (11) angeordnet ist.

6. Antriebseinheit nach Anspruch 5, **dadurch gekennzeichnet, dass** das Federelement (11) eine Blattfeder ist.

7. Antriebseinheit nach Anspruch 6, **dadurch gekennzeichnet, dass** die Blattfeder (11) in der Scheibenebene drehbeweglich mit der Nabe (1) und/oder dem Freilaufträger (8) verbunden ist.

8. Antriebseinheit nach Anspruch 7, **dadurch gekennzeichnet, dass** die bewegliche Lagerung ein Drehgelenk (7, 10, 12) umfasst.

9. Antriebseinheit nach Anspruch 8, **dadurch gekennzeichnet, dass** das Drehgelenk einen Bolzen (12), insbesondere Nietbolzen, umfasst.

10. Antriebseinheit nach einem der Ansprüche 4 bis 9, **dadurch gekennzeichnet, dass** zwischen Nabe (1) und Freilaufträger (8) ein drehbewegliches Lager (14) angeordnet ist.

11. Antriebseinheit nach Anspruch 10, **dadurch gekennzeichnet, dass** das drehbewegliche Lager (14) ein Gleitlager ist.

12. Antriebseinheit nach Anspruch 10, **dadurch gekennzeichnet, dass** das drehbewegliche Lager (14) ein Wälzlager ist.

13. Antriebseinheit.nach Anspruch 1 oder 2, **dadurch gekennzeichnet, dass** der Freilauf (15) scheibenseitig mit mindestens einem Federelement (11), das in axialer Richtung elastisch ist, mit der Scheibe verbunden ist.

14. Antriebseinheit nach Anspruch 13, **dadurch gekennzeichnet, dass** diese einen Freilauf träger (8) umfasst, der mit dem Federelement (11) mit der Scheibe (18) verbunden ist.

## Claims

1. Drive unit having a radially inner drive element (1) and a radially outer drive element (18) and having a freewheel (15) arranged between the inner drive element (1) and the outer drive element (18), with the inner drive element being a hub (1) and the outer drive element being a pulley, **characterized in that** the hub (1) and the pulley (18) are axially movable relative to one another.

2. Drive unit according to Claim 1, **characterized in that** the outer drive element is a belt pulley (18).

3. Drive unit according to Claim 1 or 2,
**characterized in that** the freewheel (15) is connected at the hub side to the hub (1) by means of at least one spring element (11) which is elastic in the axial direction.

4. Drive unit according to Claim 3, **characterized in that** the freewheel (15) comprises a freewheel carrier (8) which is connected by means of the spring element (11) to the hub (1).

5. Drive unit according to Claim 4, **characterized in that** the freewheel carrier (8) comprises at least one lug (9) and the hub (1) comprises at least one lug (6), between which lugs the spring element (11) is arranged.

6. Drive unit according to Claim 5, **characterized in that** the spring element (11) is a leaf spring.

7. Drive unit according to Claim 6, **characterized in that** the leaf spring (11) is connected, so as to be rotationally movable in the pulley plane, to the hub (1) and/or to the freewheel carrier (8).

8. Drive unit according to Claim 7, **characterized in that** the movable mounting comprises a revolute joint (7, 10, 12).

9. Drive unit according to Claim 8, **characterized in that** the revolute joint comprises a bolt (12), in particular riveted bolt.

10. Drive unit according to one of Claims 4 to 9, **characterized in that** a rotationally movable bearing (14) is arranged between the hub (1) and freewheel carrier (8).

11. Drive unit according to Claim 10, **characterized in that** the rotationally movable bearing (14) is a plain bearing.

12. Drive unit according to Claim 10, **characterized in that** the rotationally movable bearing (14) is a rolling bearing.

13. Drive unit according to Claim 1 or 2,
**characterized in that** the freewheel (15) is connected at the pulley side to the pulley by means of at least one spring element (11) which is elastic in the axial direction.

14. Drive unit according to Claim 13, **characterized in that** said drive unit comprises a freewheel carrier (8) which is connected by means of the spring element (11) to the pulley (18).

## Revendications

1. Unité motrice ayant un composant moteur interne (1) dans le plan radial et un composant moteur externe (18) dans le plan radial ainsi qu'un roulement libre (15) disposé entre le composant moteur interne (1) et le composant moteur externe (18), le composant moteur interne étant un moyeu (1) et le composant moteur externe étant un disque, **caractérisée en ce que** le moyeu (1) et le disque (18) peuvent être déplacés l'un contre l'autre dans le plan axial.

2. Unité motrice selon la revendication 1,
**caractérisée en ce que** le composant moteur externe est un disque à courroie (18).

3. Unité motrice selon la revendication 1 ou 2, **caractérisée en ce que** le roulement libre (15) est relié côté moyeu à au moins un élément de ressort (11) élastique dans la direction axiale à l'aide du moyeu (1).

4. Unité motrice selon la revendication 3,
**caractérisée en ce que** le roulement libre (15) comprend un support de roulement libre (8) relié au moyeu (1) via l'élément de ressort (11).

5. Unité motrice selon la revendication 4,
**caractérisée en ce que** le support de roulement libre (8) comprend au moins un bec (9) et que le moyeu (1) comprend au moins un bec (6) entre lesquels est disposé l'élément de ressort (11).

6. Unité motrice selon la revendication 5,
**caractérisée en ce que** l'élément de ressort (11) est un ressort à lames.

7. Unité motrice selon la revendication 6,
**caractérisée en ce que** le ressort à lames (11) est relié de façon mobile en rotation au moyeu (1) et/ou au support de roulement libre (8) dans le plan du disque.

8. Unité motrice selon la revendication 7,
**caractérisée en ce que** le palier mobile comprend une articulation (7, 10, 12).

9. Unité motrice selon la revendication 8,
**caractérisée en ce que** l'articulation comprend un boulon (12), notamment un boulon riveté.

10. Unité motrice selon l'une quelconque des revendications 4 à 9, **caractérisée en ce qu'**un palier (14) mobile en rotation est disposé entre le moyeu (1) et le support de roulement libre (8).

11. Unité motrice selon la revendication 10,
**caractérisée en ce que** le palier (14) mobile en rotation est un palier glissant.

12. Unité motrice selon la revendication 10,
**caractérisée en ce que** le palier mobile en rotation (14) est un palier tournant.

13. Unité motrice selon la revendication 1 ou 2, **caractérisée en ce que** le roulement libre (15) est relié côté disque à au moins un élément de ressort (11) élastique dans la direction axiale à l'aide du disque.

14. Unité motrice selon la revendication 13,
**caractérisée en ce que** celle-ci comprend un support de roulement libre (8) relié à l'élément de ressort (11) à l'aide du disque (18).
